# EUROPEAN PATENT APPLICATION

(11) **EP 1 946 954 A1**
(43) Date of publication of application: **23.07.2008**
(21) Application number: 07100765.2
(22) Date of filing: 18.01.2007
(51) Int. Cl.: B60K 15/04, B60K 15/035

(54) **Method and system for detecting a cap off situation on the fuel tank of a vehicle**

(71) Applicant: Inergy Automotive Systems Research (SA), 1120 Bruxelles (BE)
(72) Inventor: Slusser, Kevin, Rochester, MI 48307 (US); Grant, Eric, Ypsilanti, MI 48197 (US)
(74) Representative: Jacques, Philippe

(57) **Abstract**

Method for detecting a cap off situation on the fuel tank of a combustion engine vehicle having a fill pipe head located under a fuel fill door, according to which a cap off test is run when the engine is started again after having been switched off and when a door switch indicates that the fuel fill door has been opened.

## Description

The present invention relates to a "cap off" event detection method and system for a vehicle fuel tank and to fuel system incorporating such a system.

Increasing the safety of currently used fuel tanks, involves the prevention or minimization of fuel vapour leaks. Both the Environmental Protection Agency (EPA) and the California Air Resources Board (CARB), specify the requirement of On-Board Diagnostic II (OBD II) for the check for evaporative emission system for leaks. This requires detecting system leaks equivalent to an orifice larger than 0.5 mm (0.020 inch) in diameter for vehicles produced starting model year 2000.

A fuel tank generally contains fuel in gaseous and liquid form. In particular conditions (like temperature increase for instance), a dangerous buildup of pressure may occur inside the fuel tank. For that reason it is advantageous to vent the fuel tank, providing there is no emission of hydrocarbons to the atmosphere.

In order to prevent this emission, the fuel tank is generally vented using an evaporative emission control system comprising in general a vapour canister containing an adsorptive material (eg. charcoal), through which fuel vapours escaping from the fuel tank are directed.

Leaks in the fuel tank or at the interface between the fuel tank and components (eg. canister, valves, ...) may exist and their presence must be checked to meet the above mentioned requirements. This is currently done with on-board diagnosis (OBD) systems which use mainly 2 ways therefore: either they put the system under pressure or they put it under vacuum. Both have their drawbacks: vacuum testing cannot be realized at any moment and not even during every trip since the drive cycle must meet very precise conditions for the test to be run; and pressure testing requires a specific pump and extra plumbing which increases the cost.

To avoid these drawbacks, co-pending application USP 60/765741 in the applicant's name relates to a system using existing technology, i.e. current components of the fuel system with no need for any additional sensors, or devices and which allows a continuous and accurate detection of leaks (even small leaks). It is based on the measurement of pressure differentials, which does not burden neither the cost nor the efficiency of the results since the system uses only existing sensors to perform the leak detection.

A problem that can be encountered with the prior art OBD systems is that if the fuel cap closing off the filler pipe is not or improperly installed, the system will detect a leak and trigger a Malfunction Indicator Light (MIL), causing the vehicle owner/driver to go to a service centre while the vehicle needs no repair. To prevent this, some systems check after each engine start if there has been refuelling or not and the case being, they start a leak test right away. If this test fails, they trigger a dedicated "Cap Off Light" avoiding the above mentioned drawback.

In these systems, the refuelling event is detected though the fuel tank level gauge so that the test is only run when the fuel level inside the tank has increased. The problem is that other "cap off" events may occur for instance after cleaning the filler trap and/or cap; when the cap has already been removed while the owner/driver realises he forgot his money or credit card, notices the feeding pump doesn't work or serves inappropriate gas etc... The present invention aims at solving this problem by providing a test method which can detect any potential cap off event.

Accordingly, the present invention concerns a method for detecting a cap off situation on the fuel tank of a combustion engine vehicle having a fill pipe head located under a fuel fill door, according to which a cap off test is run when the engine is started again after having been switched off and when a door switch indicates that the fuel fill door has been opened.

Besides, running a leak test with conventional vacuum or pressure OBD systems may take a while to execute the small leak detection. Both systems are calibrated to find the small threshold leak and therefore require a longer period of time to build the necessary pressure or vacuum in the tank and have the corresponding decay rates to establish the small leak.

A preferred embodiment of the present invention aims at solving that problem by using natural pressure build up inside the tank with no engine solicitation at all. According to that embodiment, the cap off test preferably consists in at least partially sealing the tank from the atmosphere; measuring the system pressure while the tank is sealed off and if the pressure reaches a desired threshold, send a "passing" status to a control system; if the pressure does not reach the threshold during a given period of time, send a "failing" status to the control system. The pressure threshold is typically between 20 and 0 In/H2O with the cap off. Failure thresholds will be dependant on the fuel fill nozzle geometry and construction, i.e. capless head, mechanical seal, etc. The time threshold is generally no greater than 15 seconds.

Preferably, if the control system receives a "failing" status, it is reset and causes the cap off test to be performed a second time; if the second test reveals a system failure (i.e. if again, the threshold pressure cannot be reached in the given period of time so that a "failing" status is sent to the control system), a light on an instrument cluster of the vehicle illuminates notifying that the cap is not installed properly on the fill pipe head.

The fuel tank concerned by the present invention is a hollow body of varying shapes, which may be equipped with various internal or external accessories, and even accessories passing through the wall of the chamber. It is preferably made of plastic, more preferably of HDPE (high density polyethylene) and especially surface treated (fluorinated) or including a barrier layer (made of EVOH (ethylene vinyl alcohol copolymer) or polyamide (SELAR® for instance).

According to the invention, the fuel cap may be a conventional one (generally screwed on the fill head) or it may be an automatic one (including a flap able to pivot under the action of a filling gun). Fuel systems including such an automatic shutter are generally called "capless" systems, and the present invention may help detecting a failure of said system.

According to the invention, the fuel tank is preferably part of a complete fuel system. This fuel system preferably comprises a pressure sensor and a canister for adsorbing the fuel vapours generated in the tank before releasing pressure to the atmosphere. This pressure release is generally performed in a controlled way by a vent valve located downstream of the canister (or in other words: the canister is in between the fuel tank and the vent valve). According to the above described embodiment in which during the cap off test, the tank is sealed from the atmosphere, this generally happens by closing partially or completely said valve.

According to a first sub-embodiment of the invention, the vent valve is a multiple orifice valve allowing a communication with a controlled section between the tank and the atmosphere, i.e. a section that can be modified and set to a specified value in a controlled way such as described in the afore mentioned co-pending application. Hence, this valve may also act in the OBD leak tests and may be part of the OBD system. This valve may be an electronically controlled electromechanical valve, of the type described in patent application PCT/EP2006/05008, the content of which being included herein by reference.

According to a second sub-embodiment, use is made (as vent valve) of a single orifice valve, either a solenoid or a mechanical one, which enables to close a passage between the tank and the atmosphere for performing the cap off test and which is completely separated from the OBD system.

It is worth noting the "isolating" valve or device may be separate from the vent valve and may be positioned anywhere between the tank and the atmosphere, for instance between the tank and the canister. Hence, according to another embodiment of the invention, the fuel system comprises at least one roll-over-valve (ROV) communicating the fuel tank with the fuel vapour canister and being able to close to seal of the tank from the atmosphere during the cap off test. However, the closest the "isolation" valve is to the atmosphere, the better the system is in order to be able to test most parts of the system. Hence, the above described embodiments where the vent valve to the atmosphere is the isolating device are preferred.

The pressure sensor mentioned above may be a specific pressure sensor dedicated to the cap off test. However, preferably, it is a pressure sensor already mounted on the fuel tank for transmitting pressure data to another part of the fuel system, like the OBD system for instance.

The fuel system of the invention (or the vehicle to which it is dedicated/mounted) comprises a door switch i.e. a sensor which is able to sense that the fuel fill door (which covers the head of the filler pipe sealed of by the cap) is opened. Any type of door switch may be used provided it is able to send a signal to the control unit running the cap off tests. Possible switches are momentary contact less switches and Hall Effect switches.

The above mentioned control unit may also be a separate one, specifically dedicated to the cap off test so that the method/system of the invention can be added to any already present OBD system because it is independent from the OBD test itself. Hence, it allows the up scaling of current vehicles not provided with the cap off detection function so long as the system has a valve on the end of it and a pressure sensor along with the addition of a door switch.

According to a preferred embodiment of the invention, the fuel system comprises a fuel system control unit (FSCU) which controls the cap off detection test method of the invention besides managing other operating conditions and functioning parameters of the fuel system.

The FSCU preferably is a standalone controller, different from the ECU (or Engine Control Unit) and which has taken over the control of the fuel system from the ECU, ie. the ECU does not directly control the fuel system any longer. The FSCU communicates with the ECU also for indication of any fuel system failure to the ECU. This FSCU generally:
- has means for controlling functions of the fuel system like venting during refuelling, purging the canister, controlling the flow of fuel from the fuel supply pump to the engine etc...;
- is connected with at least one fuel system component to send signals or receive signals from said at least one fuel system component;
- is connected with at least one sensor that sends signals to the FSCU and/or receives signals from an engine control unit (ECU); and/or
- is adapted to electronically and bi-directionally communicate with the ECU.

In a preferred embodiment, the FSCU also controls the OBD leak tests. According to another embodiment, the method of the invention is controlled by the ECU itself, but this is less preferred.

And finally, the method of the invention may also use information from a fuel level gauge. According to that embodiment, the cap off test is also run when a fuel level gauge informs the control unit that refuelling has taken place. This might help in the case the tank was filled without switching of the engine, in which case the cap off test is normally not performed according to the method as described above.

Another object of the invention is a cap off detection system incorporated to a fuel system and/or to a vehicle and being able to apply the above described method, said system comprising:
a) a fuel tank equipped with a fill pipe having a fuel cap mounted on its head located under a fuel door;
b) a fuel door switch able to sense when the fuel door is opened;
c) means for at least partially sealing the tank from the atmosphere when the engine is started after having been switched off for a while;
d) means for measuring the pressure inside the tank while it is sealed off;
e) means for comparing said pressure with a desired threshold pressure and to send a test status ("passed" or "failed") to a control system.

All the embodiments described above for the method apply to the system of the invention, provided appropriate devices (as described) are incorporated therein.

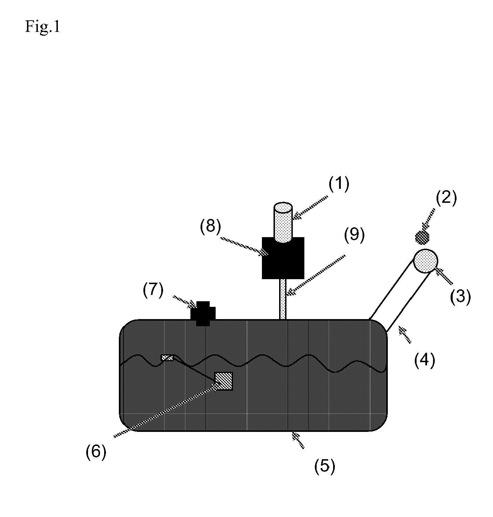

Figure 1 illustrates a preferred embodiment of the present invention and is not to be construed as limiting its scope.

It shows a fuel tank (5) comprising a filler pipe (4) on the head of which is mounted a fill cap (3) which is located below a fuel door (not shown) which is linked to a door switch (2). The tank is equipped with a level gauge (6), a pressure gauge (7) and a vent line (9) leading to a canister (8) which is isolated from the atmosphere through a vent valve (1). The door switch may either be mounted on the car body, or it may be part of the fuel system.

The system illustrated performs a test after each cap off event which is determined by using feed back from the fuel door switch (2), from the engine status sensor (not shown) and from the fuel level sensor (6) in the system. Once a cap off event is detected, the valve (1) moves to a set (partially) sealed state and creates a controlled leak in the system. A solenoid valve may be used that completely isolates the tank or a multiple orifice OBD valve as described above. This valve (1) is not necessarily positioned at the end of the system after the vent line (9) and the charcoal canister (8) to properly detect a cap off condition. After the system is partially or fully sealed, the system pressure is measured via the pressure sensor (7) that is typically mounted on the fuel tank (5). The system should generate pressure during this minimal or non-venting period. Once the system pressure reaches a desired threshold the test is complete and receives passing status. If the system receives a failing status it will reset and perform the test a second time. If the second test receives a passing status, the first test procedure status will be discarded as the second test is sufficient to prove a non-leak condition. If the test reveals a system failure a light on the instrument cluster would illuminate notifying the driver that the fuel fill cap (3) is not installed properly on the head of the fill pipe (4).

## Claims

1. - Method for detecting a cap off situation on the fuel tank of a combustion engine vehicle having a fill pipe head located under a fuel fill door, according to which a cap off test is run when the engine is started again after having been switched off and when a door switch indicates that the fuel fill door has been opened.

2. - Method according to the preceding claim, wherein the cap off test consists in at least partially sealing the tank from the atmosphere; measuring the system pressure while the tank is sealed off and if the pressure reaches a desired threshold, send a "passing" status to a control system; if the pressure does not reach the threshold during a given period of time, send a "failing" status to the control system.

3. - Method according to the preceding claim, wherein if the control system receives a "failing" status, it is reset and causes the cap off test to be performed a second time; if the second test reveals a system failure, a light on an instrument cluster of the vehicle illuminates notifying that the cap is not installed properly on the fill pipe head.

4. - Method according to claim 2 or 3, wherein the fuel tank is part of a fuel system comprising a pressure sensor, a canister and a vent valve and wherein during the cap off test, the tank is sealed from the atmosphere by closing partially or completely the vent valve.

5. - Method according to the preceding claim, wherein the vent valve is a multiple orifice electronically controlled electromechanical valve allowing a communication with a controlled section between the tank and the atmosphere and being part of an OBD system.

6. - Method according to claim 4, wherein the vent valve is a single orifice valve enabling to close a passage between the tank and the atmosphere for performing the cap off test.

7. - Method according to any of claims 4 to 6, wherein the pressure sensor is used both for measuring the pressure within the tank during the cap off test and for transmitting pressure data to another part of the fuel system.

8. - Method according to any of claims 4 to 7, wherein the fuel system comprises a fuel system control unit (FSCU) which controls the cap off test besides managing other operating conditions and functioning parameters of the fuel system.

9. - Method according to any of the preceding claims, wherein the cap off test is also run when a fuel level gauge informs the control unit that refuelling has taken place even if the engine was not switched off.

10. - Cap off detection system incorporated to a fuel system and/or to a vehicle and being able to apply the method of any of the preceding claims, said system comprising:
a) a fuel tank equipped with a fill pipe having a fuel cap mounted on its head located under a fuel door;
b) a fuel door switch able to sense when the fuel door is opened;
c) means for at least partially sealing the tank from the atmosphere when the engine is started after having been switched off for a while;
d) means for measuring the pressure inside the tank while it is sealed off;
e) means for comparing said pressure with a desired threshold pressure and to send a test status ("passed" or "failed") to a control system.
